# EUROPEAN PATENT SPECIFICATION

(11) **EP 3 640 969 B1**
(45) Date of publication and mention of the grant of the patent: **27.05.2026**
(21) Application number: 19202427.1
(22) Date of filing: 10.10.2019
(51) Int. Cl.: H01J 49/00, H01J 49/42

(54) **METHODS AND DEVICES FOR HIGH-THROUGHPUT DATA INDEPENDENT ANALYSIS**
VERFAHREN UND VORRICHTUNGEN FÜR DATENUNABHÄNGIGE ANALYSE MIT HOHEM DURCHSATZ
PROCÉDÉS ET DISPOSITIFS D'ANALYSE INDÉPENDANTE DE DONNÉES À HAUT DÉBIT

(30) Priority: 19.10.2018 US 201816165909
(43) Date of publication of application: 22.04.2020
(73) Proprietor: Thermo Finnigan LLC, San Jose, CA 95134 (US)
(72) Inventor: KOVTOUN, Viatcheslav V., San Jose, CA California 95134 (US)
(74) Representative: Boult Wade Tennant LLP

(56) References cited:
- US-A1- 2013 105 681
- US-A1- 2016 020 076
- ANONYMOUS: "Orbitrap - Wikipedia", 23 July 2018 (2018-07-23), pages 1 - 5, XP093288063, Retrieved from the Internet <URL:https://en.wikipedia.org/w/index.php?title=Orbitrap&oldid=851578279>
- WOLFGANG R. PLASS ET AL: "Multiple-reflection time-of-flight mass spectrometry", INTERNATIONAL JOURNAL OF MASS SPECTROMETRY., vol. 349-350, 1 September 2013 (2013-09-01), NL, pages 134 - 144, XP055228551, ISSN: 1387-3806, DOI: 10.1016/j.ijms.2013.06.005

## Description

### FIELD

The present disclosure generally relates to the field of mass spectrometry including methods and devices for high-throughput data independent analysis.

### INTRODUCTION

Tandem mass spectrometry, referred to as MS/MS, is a popular and widely-used analytical technique whereby precursor ions derived from a sample are subjected to fragmentation under controlled conditions to produce product ions. The product ion spectra contain information that is useful for structural elucidation and for identification of sample components with high specificity. In a typical MS/MS experiment, a relatively small number of precursor ion species are selected for fragmentation, for example those ion species of greatest abundances or those having mass-to-charge ratios (m/z's) matching values in an inclusion list. There is growing interest in the use of "all-mass" MS/MS, in which all or a substantial subset of the precursor ions are fragmented. All-mass MS/MS yields information-rich spectra and removes the need to select and isolate particular ion species prior to mass analysis. In order to simplify the interpretation of product ion spectra produced by all-mass MS/MS, the analysis is conducted as a series of fragmentation/spectral acquisition cycles performed on different subsets or groups of the precursor ions, with each subset or group representing a different range of precursor ion m/z's. For example, if the precursor ions have m/z's ranging from 200 to 2000 Th, the first fragmentation/spectral acquisition cycle may be performed on a first group of ions having m/z's between 200 and 210 Th, the second fragmentation/acquisition cycle may be performed on a second group of ions having m/z's between 210 and 220 Th, and so on. U.S. Pat. No. 7,157,698 to Makarov et al. teaches a mass spectrometer architecture for implementing all-mass MS/MS with separation of the precursor ions into groups according to their m/z's. In the Makarov apparatus, an orthogonal-ejection two-dimensional ion trap is employed to eject m/z-grouped precursor ions into a fragmentation cell, where the ions undergo fragmentation. The resultant product ions are transported to the entrance of a time-of-flight (TOF) mass analyzer for acquisition of a mass spectrum. TOF mass analyzers are particularly well-suited to all-mass MS/MS experiments due to their wide mass ranges and relatively short analysis times. US 2016 0020076 A1 pertains to a tandem mass spectrometry apparatus and discloses a collision cell for tandem mass spectrometry. US 2013 0105681 A1 discloses a mass spectrometer comprising an ion interface device positioned in the ion path between an ion trap and a pulsed mass analyzer. The ion interface device includes a transport/collision section and a plurality of spatially separated confinement cells. A packet of ions ejected from the ion trap is received by the ion interface device and directed to a selected one of the plurality of confinement cells.

In TOF and other mass analyzers, large variations in the initial kinetic energies of the ions may significantly compromise measurement performance, particularly with respect to resolution and mass accuracy. As such, it is important to reduce the kinetic energy spread of the ejected ions, and product ions derived therefrom, prior to delivering the ions to the entrance of the mass analyzer. Cooling of the ions to reduce kinetic energy and kinetic energy spread may be accomplished by directing the ions through a cooling region in which the ions lose energy via collisions with neutral gas molecules. The cooling time may be substantially greater than the times required for ejection of an ion group from the trap (as well as for mass analysis of an ion group), which means that the ejection of a subsequent ion group from the trap into the fragmentation/cooling region must be delayed until cooling of the first ion group is completed. Differently expressed, the cooling period limits the rate at which the all-ion MS/MS analysis may be conducted and reduces the total number of analyses that may be performed during a chromatographic elution peak. Of course, the rate may be increased by employing a shorter cooling period, but doing so has a deleterious effect on resolution and/or mass accuracy.

Decoupling the fragmentation cell, the cooling, and the mass analysis from one another while keeping the product ions of one fragmentation cycle together, but separate from product ions from other fragmentation cycles, can improve the throughput of the analysis. From the foregoing it will be appreciated that a need exists for improved systems and methods for improved high-throughput data independent analysis, such as for all atom MS/MS.

### SUMMARY

According to a first aspect of the present invention, there is provided a method of analyzing a sample in accordance with claim 1.

In various embodiments of the first aspect, the cycle time of the mass analyzer can be greater than about ten times longer than the cycle time of the narrow mass range scan time, such as less than about 15 times longer than the cycle time of the narrow mass range scan time.

The time of the narrow mass range scan time can be between about 50 microseconds and about 500 microseconds. Alternatively, the narrow mass range scan time can be between about 100 microseconds and about 400 microseconds, or even between about 200 microseconds and about 300 microseconds.

In various embodiments of the first aspect, the cycle time of the mass analyzer is between about 1 millisecond and about 10 milliseconds, such as between about 3 milliseconds and about 7 milliseconds, even between about 4 and 6 milliseconds.

A second aspect of the invention resides in a mass spectrometer as set out in claim 5.

The first moving latch ion transport system can include a plurality of pole rods arranged in first and second rows, the second row parallel to the first row, each pole rod of the first row forming a pole rod pair with a corresponding pole rod of the second row. The pole rod pairs can define a plurality of ion transport cells, each ion transport cell uniquely corresponding to a contiguous group of a fixed number of pole rod pairs, such that no two ion transport cells share a common pole rod pair.

The second moving latch ion transport system can include a second plurality of pole rods arranged in third and fourth rows, the fourth row parallel to the third row. Each pole rod of the third row can form a pole rod pair with a corresponding pole rod of the fourth row. The pole rod pairs can define a plurality of ion transport cells, each ion transport cell uniquely corresponding to a contiguous group of a fixed number of pole rod pairs, such that no two ion transport cells share a common pole rod pair.

In particular embodiments, the first ion transport system can be configured to eject ions in a direction parallel to the pole rods into the storage cell array and the second ion transport system can be configured to eject ions in a direction of travel along the second plurality of pole and into the mass analyzer.

The narrow mass range has a range of less than about 20 Da. Alternatively, the narrow mass range has a range of less than about 10 Da, or even a range of less than about 5 Da.

In various embodiments of the second aspect, the mass spectrometer can further include a first ion path including the first storage cell array and the second storage cell array and a second ion path including a third storage cell array and a fourth storage cell array, wherein the fragmentation device directs fragment ions from a third narrow mass range and fragment ions from a fourth narrow mass range to the second ion path. In particular embodiments, the first ion path can further include a first ion transport system configured to transport fragment ions from the fragmentation device to the first storage cell array while isolating fragment ions from the first narrow mass range from fragment ions from the second narrow mass range and the second ion path can further include a second ion transport system configured to transport fragment ions from the fragmentation device to the third storage cell array while isolating fragment ions from the third narrow mass range from fragment ions from the fourth narrow mass range. In particular embodiments, the mass spectrometer can further include a third ion transport system configured to transport fragment ions from the second storage cell array and the fourth storage cell array to the mass analyzer.

### DRAWINGS

For a more complete understanding of the principles disclosed herein, and the advantages thereof, reference is now made to the following descriptions taken in conjunction with the accompanying drawings, in which:
Figure 1 is a block diagram illustrating an exemplary mass spectrometry system.
Figure 2 is a block diagram illustrating another exemplary mass spectrometry system, in accordance with various embodiments.
Figure 3 is a block diagram illustrating an exemplary ion transport mechanism, in accordance with various embodiments.
Figures 4 and 5 are diagrams showing detailed views of portions of the exemplary mass spectrometry system of Figure 2, in accordance with various embodiments.
Figure 6 is a flow diagram illustrating a method of analyzing the mass of ions in a mass analyzer, in accordance with various embodiments.
Figure 7 is a block diagram illustrating an exemplary mass spectrometry system with dual ion paths, in accordance with various embodiments.
Figure 8 is a block diagram illustrating an exemplary computer system, in accordance with various embodiments.

It is to be understood that the figures are not necessarily drawn to scale, nor are the objects in the figures necessarily drawn to scale in relationship to one another. The figures are depictions that are intended to bring clarity and understanding to various embodiments of apparatuses, systems, and methods disclosed herein. Wherever possible, the same reference numbers will be used throughout the drawings to refer to the same or like parts. Moreover, it should be appreciated that the drawings are not intended to limit the scope of the present teachings in any way.

### DESCRIPTION OF VARIOUS EMBODIMENTS

Embodiments of systems and methods for transporting ions are described herein.

The section headings used herein are for organizational purposes only and are not to be construed as limiting the described subject matter in any way.

In this detailed description of the various embodiments, for purposes of explanation, numerous specific details are set forth to provide a thorough understanding of the embodiments disclosed. One skilled in the art will appreciate, however, that these various embodiments may be practiced with or without these specific details. In other instances, structures and devices are shown in block diagram form. The scope of the invention is defined by the appended claims.

In this application, the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present teachings.

As used herein, "a" or "an" also may refer to "at least one" or "one or more." Also, the use of "or" is inclusive, such that the phrase "A or B" is true when "A" is true, "B" is true, or both "A" and "B" are true. Further, unless otherwise required by context, singular terms shall include pluralities and plural terms shall include the singular.

A "system" sets forth a set of components, real or abstract, comprising a whole where each component interacts with or is related to at least one other component within the whole.

### MASS SPECTROMETRY PLATFORMS

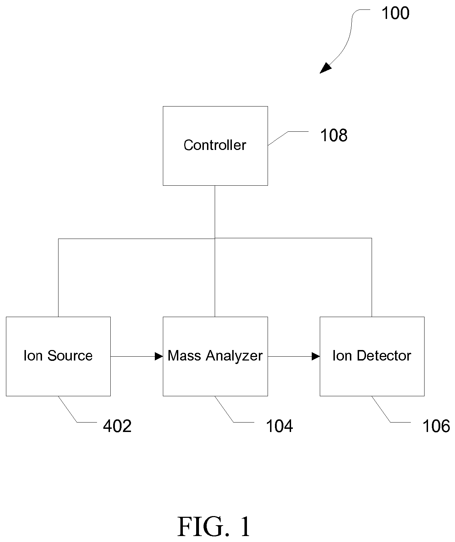

Mass spectrometry platform 100 can include components as displayed in the block diagram of Figure 1. Elements of Figure 1 can be incorporated into mass spectrometry platform 100. Mass spectrometer 100 can include an ion source 102, a mass analyzer 104, an ion detector 106, and a controller 108.

The source 102 generates a plurality of ions from a sample. The ion source can include, but is not limited to, a matrix assisted laser desorption/ionization (MALDI) source, electrospray ionization (ESI) source, inductively coupled plasma (ICP) source, electron ionization source , photoionization source, glow discharge ionization source, thermospray ionization source, and the like.

The mass analyzer 104 separates ions based on a mass to charge ratio of the ions. For example, the mass analyzer 104 can include a quadrupole mass filter analyzer, a time-of-flight (TOF) analyzer, a quadrupole ion trap analyzer, an electrostatic trap (e.g., Orbitrap) mass analyzer, and the like. The mass analyzer 104 is configured to fragment the ions and further separate the fragmented ions based on the mass-to-charge ratio.

The ion detector 106 detects ions. For example, the ion detector 106 can include an electron multiplier, a Faraday cup, and the like. Ions leaving the mass analyzer are detected by the ion detector. In various embodiments, the ion detector can be quantitative, such that an accurate count of the ions can be determined.

The controller 108 can communicate with the ion source 102, the mass analyzer 104, and the ion detector 106. For example, the controller 108 can configure the ion source or enable/disable the ion source. Additionally, the controller 108 can configured the mass analyzer 104 to select a particular mass range to detect. Further, the controller 108 can adjust the sensitivity of the ion detector 106, such as by adjusting the gain. Additionally, the controller 108 can adjust the polarity of the ion detector 106 based on the polarity of the ions being detected. For example, the ion detector 106 can be configured to detect positive ions or be configured to detected negative ions.

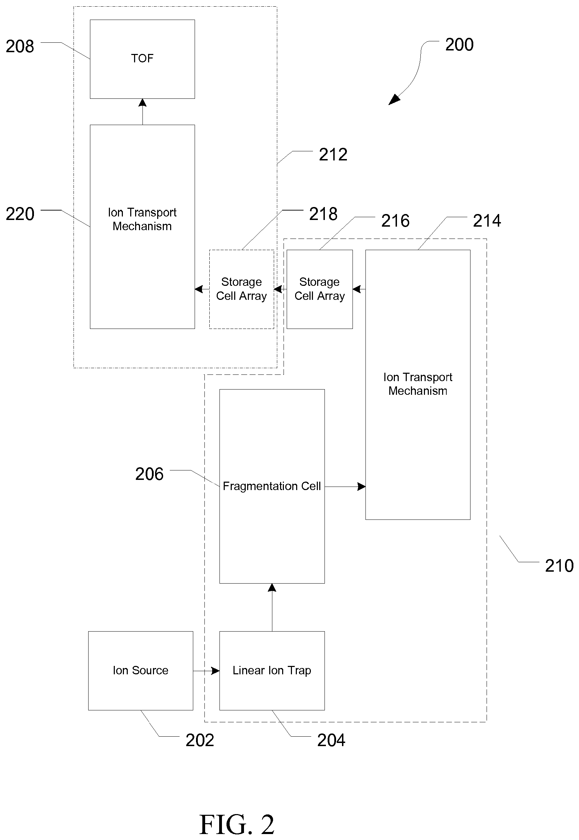

Mass spectrometry system 200 includes components as displayed in the block diagram of Figure 2. Mass spectrometry system 200 includes an ion source 202, a linear ion trap 204, a fragmentation cell 206, and a long transient mass analyzer 208, which is be a multireflection TOF mass analyzer or a Fourier transform mass analyzer like an ORBITRAP mass analyzer.

Ions from the ion source 202 are accumulated in the linear ion trap 204. The linear ion trap 204 separates the ions into a plurality of narrow mass ranges. The narrow mass ranges have a width of less than about 20 Da, such as less than about 10 Da, even less than about 5 Da. The ions from each narrow mass range are sent to the fragmentation cell 206 where they are fragmented into fragment ions. The fragment ions from each narrow mass range can are mass analyzed in the mass analyzer. Mass analyzing the ion fragments for each narrow mass range separately from the fragment ions of other narrow mass ranges can simplify the assignment of fragment ions to the precursor ions.

The linear ion trap 204 can eject ions radially. Radial ejection can increase the analytical capacity of the linear ion trap as compared to axial ejection. Additionally, with radial ejection, a portion of the ions can be ejected out the opposite side of the linear ion trap 204. In various embodiments, the ion intensity of a narrow mass range can be determined by measuring the intensity of the ions ejected from the opposite side of the linear ion trap 204. In some embodiments, information about the ion intensity of the narrow mass range can be used for automatic gain control.

There can be a significant difference between the cycle time of the linear ion trap 204 and the long transient mass analyzer 208. For example, the time to scan ions within a narrow mass range out of the linear ion trap 204 and into the fragmentation cell 206 is between about 50 microseconds and about 500 microseconds, such as between about 100 microseconds and about 400 microseconds, even between about 200 microseconds and about 300 microseconds. The time required for the long transient mass analyzer is significantly greater, such as at least about 5 times greater, such as at least about 10 times greater, even at least about 15 times greater. For example, the cycle time of the long transient mass analyzer can be on the order of a few milliseconds, such as between about 1 millisecond and about 10 milliseconds, such as between about 3 milliseconds and about 7 milliseconds, even between about 4 and 6 milliseconds.

Due to the significant cycle time difference between the linear ion trap 204 and the long transient mass analyzer 208, the system is considered to have two timing regions 210 and 212. Timing region 210 includes the linear ion trap 204 and the fragmentation cell 206, and timing region 212 includes the long transient mass analyzer 208. Additionally, timing region 210 includes a moving latch ion transport mechanism 214 and a storage cell array 216 and timing region 212 includes an optional storage cell array 218 and a moving latch ion transport mechanism 220.

Moving latch ion transport mechanisms 214 transports ion packets (ion fragments for a narrow mass range) from the fragmentation cell 206 to the storage cell array 216 while maintaining the separation between narrow mass ranges. The storage cell array 216 stores fragment ions from one narrow mass range separately from fragment ions from another mass range. The fragment ions are transferred from storage cell array 216 to storage cell array 218 and then the ion stored by storage cell array 218 are transferred to the ion transport mechanism 220 to be transported to the mass analyzer 208. Here again, ion transport mechanism 220 maintains separation between ion packets to ensure fragment ions from one narrow mass range can be analyzed by the mass analyzer 208 separately from fragment ions from other narrow mass ranges.

Timing regions 210 and 212 are decoupled at the point between storage cell array 216 and storage cell array 218. Ions are fed into storage cell array 216 according to the timing requirements of timing region 210 while ions are transferred out of storage cell array 218 according to the timing requirements of timing region 212. It may only be necessary for the timing cycles of timing region 210 and timing region 212 to align when the ions are transferred from storage cell array 216 to storage cell array 218. At that point, storage cell array 218 is empty so that ions from storage cell array 216 do not mix with ions from previous cycles.

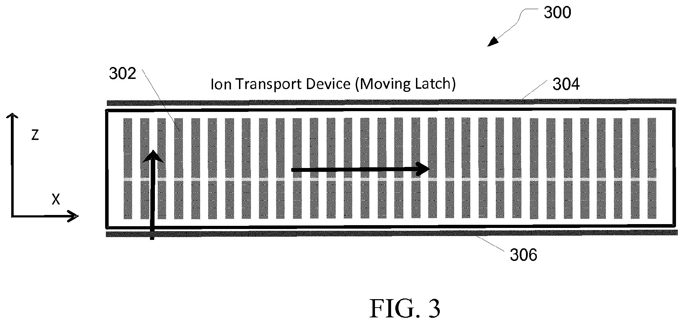

Figure 3 is a block diagram illustrating ion transport mechanism 300.

The ion transport mechanism 300 can include a plurality of pole rod pairs 302 arranged parallel to one another along a length (x-axis) of the ion transport mechanism 300. In various embodiments, each pole rod pair 302 can consist of 2 pole rods separated in the direction orthogonal to the plane of the Figure 1. Additionally, the moving latch may include guard electrodes 304 and 306.

In various embodiments, the ion transport mechanism 300 can be considered to contain a plurality of ion transport cells, defined by a contiguous group of a fixed number of pole rod pairs. The ion transport cells can be arranged such that no two ion transport cells share a common pole rod pair. For example, an ion transport cell can consist of 3 pole rod pairs, 4 pole rod pairs, or even 5 or more pole rod pairs. A pattern of DC or AC voltages can be applied to the pole rod pairs of a cell, and the same pattern can be applied to each cell of the moving latch ion transport device. In various embodiments, the pattern can include a spatial sequence or progression of voltages applied to contiguous pole rod pairs that recurs along the length of the ion transport device, such that each ion transport cell receives the same pattern of voltages. The pattern can move along the moving latch ion transport device, such as by stepping the start of pattern along the plurality of pole rod pairs. For example, at t₀ the first voltage of the pattern may be applied to a rod pair r₀ and the rest of the pattern may be applied to the contiguous rods r₁ through rₙ₋₁, and the pattern can start over again at rₙ. At t₁, the first voltage of the pattern may be applied to r₁ and the rest of the pattern may be applied to contiguous rods r₂ through rₙ, with the pattern starting over again at rₙ₊₁, while the nth voltage can be applied to r₀. At tₙ₋₁, the voltage pattern may start at rₙ₋₁, whereas at tₙ, the voltage pattern may start at r₀ again, with the first repeat of the starting at rₙ. In particular embodiments, a potential well can be created by the pattern of voltages and ions trapped in the well can be passed from cell to cell along the length of the moving latch ion transport device as the changing pattern of voltages shifts the potential well along a cell and to the next cell.

In various embodiments, ions can be transferred into the ion transport mechanism 300 by injecting the fragment ions into the ion transport mechanism 300 and parallel to the primary (longitudinal) axes of the pole rod pairs (in the z direction). The ions can then be sequentially transferred within and between the ion transport cells along the length of the ion transport mechanism 300 (x direction, perpendicular to the primary axes of the pole rods) through manipulation of the electrical potentials of the pole rods. In various embodiments, the ions can be trapped within a potential well formed by the rods. As the potential well is moved along the ion transport mechanism 300, fragment ions of various m/z ratios and ion mobilities can be kept together, rather than being dispersed along the length of the ion transport mechanism 300 as would be the case if a potential wave was used to drive the ions.

In various embodiments, the ion transport mechanism 300 can be filled with a damping or cooling gas. The damping gas can include He, N₂, Ar, air, or the like. In various embodiments, the gas can be at a pressure in a range of about 13.33mPa to 13.33Pa (0.1 mtorr to about 100 mtorr), such as in a range of about 133.33mPa to about 4Pa (1 mtorr to about 30 mtorr).

A high potential can be placed on the guard electrodes 304 and 306 to confine the ions in the z dimension, until such time as the ions need to be removed from the ion transport mechanism 300. In various embodiments, ions may be ejected from the ion transport mechanism 300 by placing a high potential on guard electrode 306 and a low potential on guard electrode 304 and driving the ions out of the ion transport mechanism 300 in the z direction (parallel to the length of the pole rods). The ions may be also ejected from the ion transport mechanism 300 in the z direction by using segmented rods with a gradient potential applied to drive the ions out of the ion transport mechanism 300. In various embodiments, several packets of ions can be transferred from the ion transport mechanism 300 at substantially the same time, such as when transferring ion packets into a storage cell array with storage cells aligned with each of the cells of the ion transport mechanism 300.

Alternatively, ions may be ejected in the x direction from the ion transport mechanism 300 into another device, such as a mass analyzer, by advancing the voltage pattern until the trailing high potential forces the ions from the end of the ion transport mechanism 300. In yet another embodiment, an electrode (not shown) can be placed adjacent to the ion transport device in the y direction. A high voltage applied to the electrode can eject the ions from the ion transport device in the y direction away from the electrode.

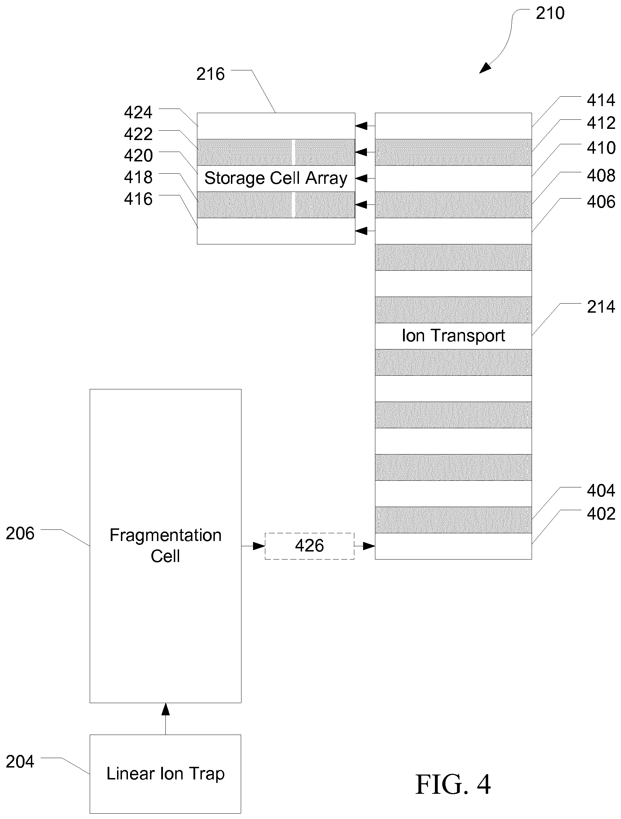

Figure 4 illustrates the operation of timing region 210. A first narrow mass range of precursor ions are ejected from the linear ion trap 204 into fragmentation cell 206. In various embodiments, the ions can be ejected radially from the linear ion trap 204. Within fragmentation cell 206, the ions are fragmented to produce fragment ions. The fragment ions are then ejected from the fragmentation cell 206 into the first cell of the ion transport mechanism 214. In various embodiments, the ions may be ejected into an optional ion transfer element 426. The ion transfer element 426 can guide the ion from the fragmentation cell 206 to the ion transport mechanism 214. Additionally, the ions can undergo collisional cooling within the ion transfer element 426 prior to entering ion transport mechanism 214.

Once the ions are ejected from fragmentation cell 206, a second narrow mass range of precursor ions can be ejected from the linear ion trap 204 into the fragmentation cell 206. While the second narrow mass range is being fragmented, the fragment ions from the first narrow mass range can be advanced in the ion transport mechanism to a second cell 404. When the optional ion transfer element 426 is used to cool the ions before entering ion transport mechanism 214, there can be an additional step in the cycle where the ions are cooling. This cycle of advancing fragment ion packets in the ion transport mechanism 214 while ions narrow mass range precursors are ejected from the ion trap 204 and fragmenting in the fragmentation cell 206 can continue until fragment ion packets reach the end of the ion transport mechanism. When fragment ion packets have advanced to cells 406-414, the ion packets can be transferred from cells 406-414 of ion transport mechanism 214 to cells 416-424 of storage cell array 216. In various embodiments, ions can be accumulated in storage cell array 216 by repeatedly transferring ions from cells 406-414 of ion transport mechanism 214 to cells 416-424 of storage cell array 216. Given the cycle time of a few hundred microseconds for timing region 210 relative to the a chromatographic peak width on the order of a few seconds, ions from the same narrow mass range should be fairly consistent over several accumulations in storage cell array 216. For example, given a storage cell array 216 with five storage cells and a cycle time for the fragmentation cell 206 of 250 microseconds, it can take about 1.25 milliseconds to process five narrow mass ranges. Each of the five storage cells 416-424 of the storage cell array 216 can accumulate 10 ion packets in about 12.5 milliseconds, considerably faster than the chromatographic timescale. In this way, the number of fragment ions to be analyzed can be increased.

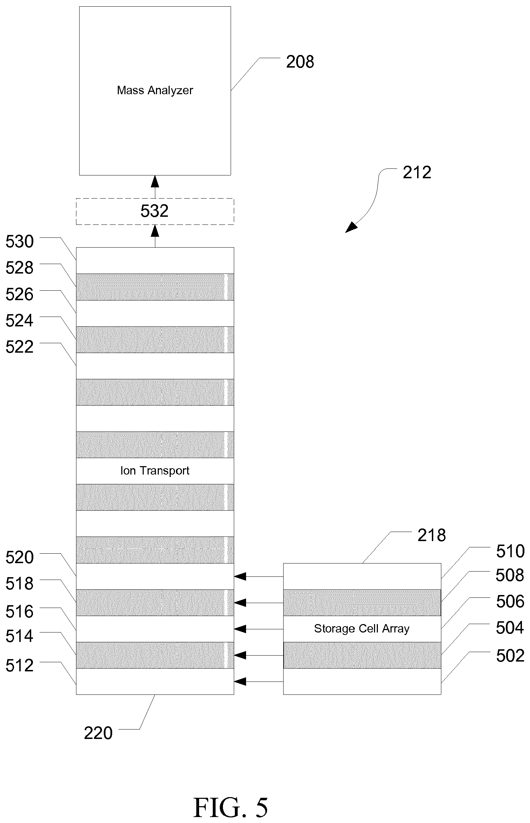

Figure 5 illustrates the operation of timing region 212. Ion packets can be transferred from storage cell array 216 into the storage cells 502-510 of storage cell array 218. In various embodiments, ion packets from multiple cells of storage cell array 216 can be transferred into storage cell array 218 at substantially the same time. In alternate embodiments, the ion packets can be transferred into storage cell array 218 sequentially. The ion packets can be transferred substantially simultaneously from storage cells 502-510 of storage cell array to cells 512-520 of ion transport mechanism 220. Alternatively, the ion packets can be transferred sequentially provided all the ion packets are transferred before the ion transport mechanism 220 advances to avoid overlapping or creating gaps.

Once in ion transport mechanism 220, the ion packets can be advanced. After several advancements, cells 512-520 of ion transport mechanism 220 will be empty and aligned with cells 502-510 of storage cell array 218 and another set of ion packets can be transferred to the ion transport mechanism 220. When the ion packets have advanced to the end of ion transport mechanism 220 (cells 522-530), ion packets can be sequentially transferred to mass analyzer 208 for analysis. In various embodiments, the ions may be ejected from final cell 530 of ion transport mechanism 220 into an optional ion transfer element 532. The ion transfer element 532 can cool the ions prior to transferring them into the mass analyzer 208 through collisional cooling.

Since the ion packets are transferred sequentially from the ion transport mechanism 220 to the mass analyzer 208, the advancement time of the ion transport mechanism 220 needs to be synchronized with mass analyzer 208. In contract, the advancement time of ion transport mechanism 214 needs to be synchronized with fragmentation cell 206. In various embodiments, it can be desirable to transfer ion packets from storage cell array 216 to storage cell array 218 once prior to transferring ions to ion transport mechanism 220, storage cell array 216 can accumulate several ion packets during the time it takes for storage cell array 220 to transfer the ion packets to ion transport mechanism 214 and for ion transport mechanism 214 to advance the ion packets. Alternatively, multiple ion transfers can occur between storage cell array 216 and storage cell array 218 and storage cell array 218 can accumulate ions until ion transport mechanism 220 is ready to receive them.

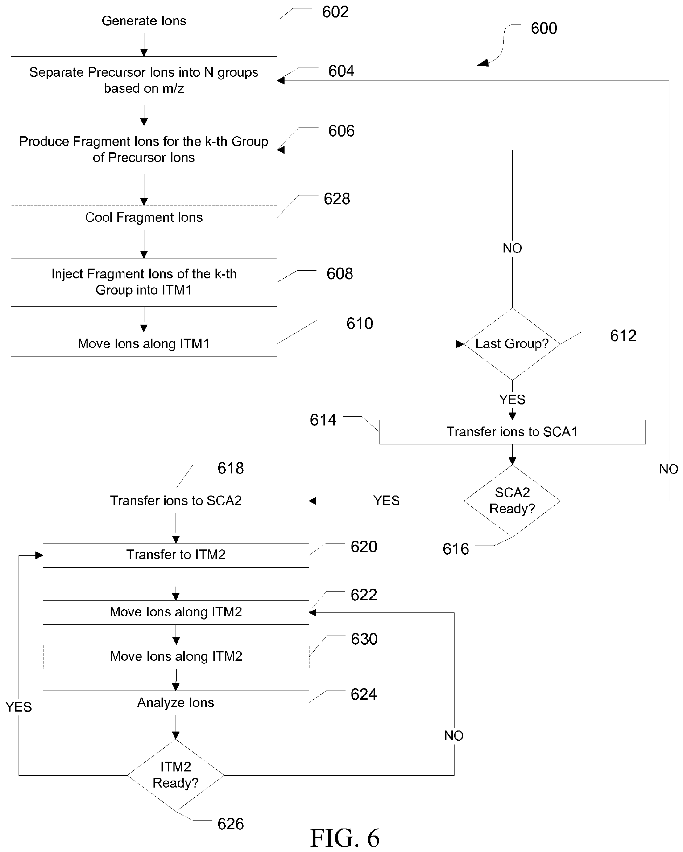

Figure 6 is a flow diagram illustrating a process for analyzing ions, in accordance with various embodiments. At 602, the ions can be generated. Depending on the sample, the ion may be generated in a variety of ways, including but not limited to, electrospray ionization (ESI), matrix assisted laser desorption/ionization (MALDI), inductively coupled plasma ionization, or various other ionization techniques. In various embodiments, the ions can be trapped and cooled, such as in an ion trap. At 604, precursor ions are separated based on a mass-to-charge (m/z) ratio, such as by using a linear ion trap or the like. The ions may be grouped into N groups based on their m/z ratio. The groups correspond to narrow mass ranges of less than about 20 Da. Alternatively, the narrow mass ranges may be less than about 10 Da, or even less than about 5 Da. At 606, the precursor ions are fragmented to produce fragment ions. Precursor ions of a particular group having a particular m/z ratio or a range of m/z ratios are fragmented together.

At 608, precursor ion or fragment ions are injected into a first cell of a first ion transport mechanism (ITM1). In various embodiments, the ions can be injected perpendicular to the pole rods and parallel to the direction of movement of the ions within the ITM1. The ions can be injected parallel to the pole rods and perpendicular to the direction of movement of the ions within the ITM1. At 610, the fragment ions are moved along ITM1. For example, the voltages can go through a complete cycle, moving the fragment ions from a first cell to a second cell of the ITM1.

Precursor ions are scanned out of a linear ion trap and small ranges of ions are fragmented. The fragment ions from each range are injected as a separate batch into ITM1. ITM1 keeps each batch of fragment ions together while keeping them separated from other batches of fragment ions generated from precursor ions having a different range of m/z ratios.

At 612, a determination can be made if the last group of ions have been injected into ITM1. If there are additional precursor ions, they can optionally be fragmented, as illustrated at 606. The cycle can continue for until each group of precursor ions is fragmented and/or injected into ITM1, that is, the cycle can repeat for each group k from 1 to N.

At 614, the ions are transferred to a first storage cell array (SCA1). In various embodiments, the fragments ions from each group k can be transferred at the same time. Significantly, SCA1 maintains separation between the groups similar to ITM1. Each of the cells of SCA1 can be aligned with a cell of ITM1. In alternate embodiments, the transfer can be sequential with one group being transferred from a cell in ITM1 to a cell in SCA1. In yet other embodiments, a subset of two or more groups can be transferred together followed by the transfer of another subset of groups.

At 616, a determination can be made if a second storage cell array (SCA2) is ready to receive ions. In various embodiments, SCA2 can be ready to receive ions if the storage cells of SCA2 are empty, such as after transferring their contents to a second ion transport mechanism (ITM2). If SCA2 is not ready to receive ions, additional precursors ions can be separated into groups, as illustrated at 604. In various embodiments, the precursor ions can be separated into the same narrow mass ranges as before so that when the ions are fragmented and transferred to SCA1, an individual storage cell can accumulate multiple packets of substantially the same ions.

Multiple accumulation cycles can result in larger quantities of the fragment ions than would otherwise be possible based on the capacity limits on the linear ion trap used to separate the precursor ions. For example, the linear ion trap receives a full range of ions from the ion source. However, the linear ion trap has a finite capacity, such as due to space charge limitations. Each narrow mass range of precursor ions can include a considerably smaller number of ions that the full mass range. Additionally, losses can occur during transmission and fragmentation of the ions. Multiple rounds of accumulation can compensate for ion loss from fragmentation and transmission as well as for capacity limitations of the linear ion trap.

If SCA2 is ready to receive ions, the ions are transferred to SCA2 at 618. In various embodiments, the fragment ions stored in the various cells of SCA1 can be transferred to SCA2 substantially at the same time. Alternatively, the cells can be transferred sequentially or in subsets.

At 620, the ions are transferred from SCA2 to ITM2. In various embodiments, the fragment ions stored in the various cells of SCA1 can be transferred to SCA2 substantially at the same time. Alternatively, the cells can be transferred sequentially or in subsets. At 622, the fragment ions can be moved along ITM2. For example, the voltages can go through a complete cycle, moving the fragment ions from a first cell to a second cell of the ITM2.

At 624, the fragment ions are transferred to a mass analyzer for mass analysis. At 626, a determination can be made if ITM2 is ready to receive additional ions from SCA2. When ions have been advanced sufficiently that the cells of ITM2 aligned with the storage cells of SCA2 are empty, ITM2 can be ready to receive addition ions, and the ions can be transferred from SCA2 or ITM2, as indicated at 620. Alternatively, at 622, the fragment ions can be advanced along ITM2 with another packet of ions being transferred to the mass analyzer for analysis.

In various embodiments, it may be advantageous to cool the ions, such as by collisional cooling after fragmentation and prior to injection into ITM1, as indicated by optional step 628, and prior to mass analysis as indicated by optional step 630. Cooling can reduce the kinetic energy of the ions which can be beneficial for containing the ions during transport in ITM1 and for mass analysis. Adding an additional component, such as ion transfer elements 426 and 532 for cooling the ions can allow cooling of the ions for an additional cycle step.

In various embodiments, a first narrow mass range can include one or more low abundance precursor ions while a second narrow mass range can include a higher abundance precursor ion. Using different numbers of accumulations can compensate for the initial differences in ion abundance. For example, the high abundance ion of the second narrow mass range can substantially fill the corresponding cell of SCA1 in one or two cycles while the low abundance ions of the first narrow mass range may take more cycles to reach the capacity of the corresponding cell of SCA1. The system can reduce the number of accumulations for the second narrow mass range to avoid fragment ion loss due to the corresponding cell being overcapacity while increasing the number of accumulations for the first narrow mass range. In various embodiments, the linear ion trap can be filled a first time and both the first narrow mass range and the second narrow mass range can be scanned out and fragmented. Then the linear ion trap can be filled a subsequent time and the first narrow mass range can be scanned out without scanning the second narrow mass range. This can reduce the number of groups of precursor ions to be processed in subsequent cycles of the linear ion trap and given sufficient numbers of skipped groups and cycles of the linear ion trap, additional cycles of the linear ion trap to increase the accumulation of fragments of the first narrow mass range can be performed in the time between transfers to SCA2.

In various embodiments, the fragment ions can be ejected from the moving latch ion transport mechanism in a direction parallel to the pole rods and perpendicular to the direction of movement of the ions within the ion transport mechanism. The fragment ions can be ejected directly into a mass analyzer, or be ejected into an ion guide or ion transport mechanism before advancing to the mass analyzer.

In various embodiments, after completing the ion transport and before ejection, continuously varying voltage pattern can be switched to static DC voltage pattern fixing momentary locations of ion pluralities in individual ion transport cells. In embodiments, ejection of ion pluralities from multiple ion transport cells can be arranged in parallel into corresponding storage cells on a cell-to-cell basis. Alternatively, ejection of ion pluralities can be arranged into a single storage cell in a consecutive way with or without switching of a repeating voltage pattern to the static DC voltage pattern.

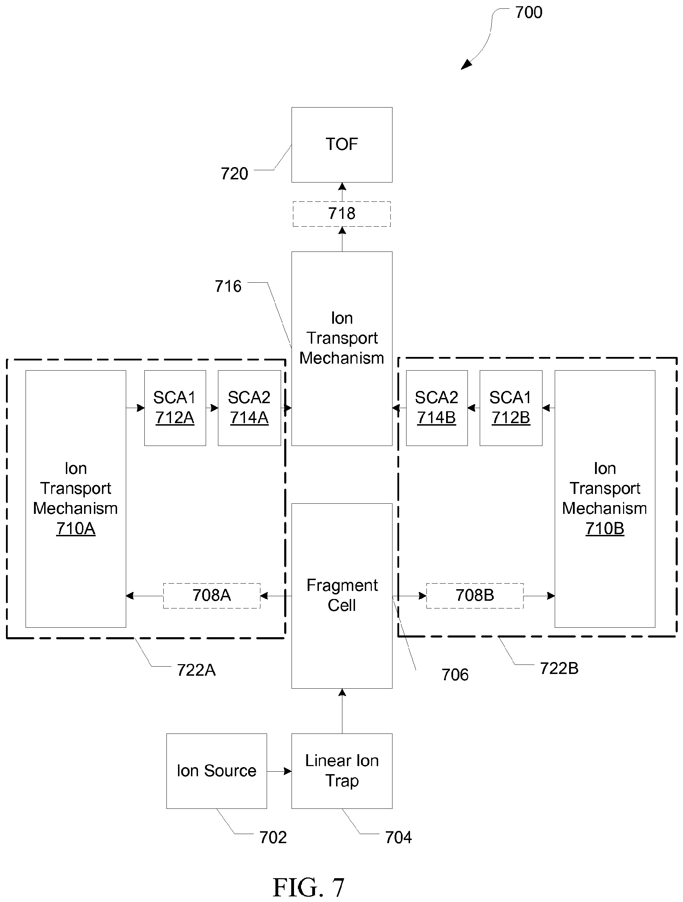

Figure 7 shows a mass spectrometer 700 with dual ion paths. Mass spectrometry system 700 can include an ion source 702, a linear ion trap 704, and a fragmentation cell 706.

Ions from the ion source 702 can be accumulated in the linear ion trap 704. In particular embodiments, the linear ion trap 704 can separate the ions into a plurality of narrow mass ranges. The ions from each narrow mass range can be sent to the fragmentation cell 706 where they can be fragmented into fragment ions.

The fragmentation cell can direct ions to one of two substantially identical ion paths 722A and 722B. Ion path 722A can include an optional ion transfer element 708A for optionally cooling the ions, an ion transport mechanism 710A, a storage cell array 712A and a storage cell array 714A. Ion path 722B can include an optional ion transfer element 708B for optionally cooling the ions, an ion transport mechanism 710B, B storage cell array 712B and B storage cell array 714B. Storage cell arrays 714A and 714B can both transfer ions into ion transport mechanism 716. Ion transport mechanism can feed ions into a mass analyzer 720, or the ions can first pass through an optional ion transfer element 718 for cooling prior to the mass analyzer 720.

In particular embodiments, fragment ions from a first narrow mass range can be directed towards ion path 722A and fragment ions from a second narrow mass range can be directed towards ion path 722B. When the fragment ions have reached the storage cell arrays 714A and 714B, the fragment ions can be transferred to ion transport mechanism 716 in alternating batches. For example, storage cell array 714A can transfer fragment ions from multiple narrow mass ranges, ion transport mechanism 716 can advance until the starting cells are empty into ion transport mechanism 716, then storage cell array 714B can transfer fragment ions from multiple narrow mass ranges into ion transport mechanism 716.

Advantageously, the use of two ion paths allows for increased cooling time in the ion transfer elements 708A and 708B, as well as increasing the time available for each step along ion transport mechanisms 710A and 710B relative to the scan time for scanning a narrow mass range from the linear ion trap 704. Increasing the cooling time and the transport time can reduce the kinetic energy ion the ions.

### COMPUTER-IMPLEMENTED SYSTEM

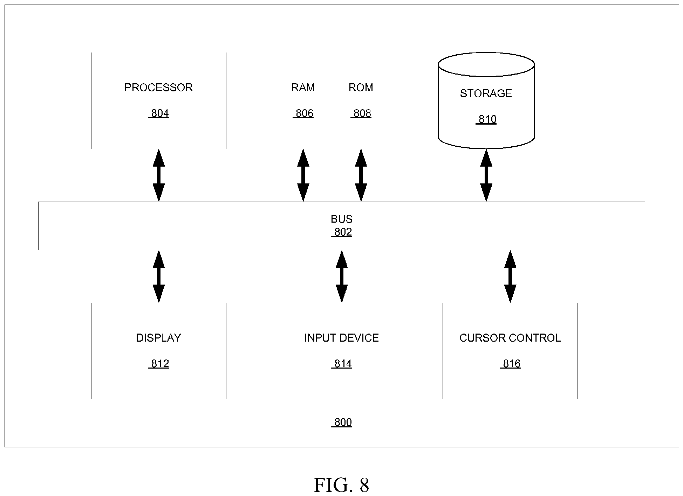

Figure 8 is a block diagram that illustrates a computer system 800, upon which embodiments of the present teachings may be implemented as which may form all or part of controller 108 of mass spectrometry platform 100 depicted in Figure 1. In various embodiments, computer system 800 can include a bus 802 or other communication mechanism for communicating information, and a processor 804 coupled with bus 802 for processing information. Computer system 800 can also include a memory 806, which can be a random access memory (RAM) or other dynamic storage device, coupled to bus 802 for determining base calls, and instructions to be executed by processor 804. Memory 806 also can be used for storing temporary variables or other intermediate information during execution of instructions to be executed by processor 804. Computer system 800 can further include a read only memory (ROM) 808 or other static storage device coupled to bus 802 for storing static information and instructions for processor 804. A storage device 810, such as a magnetic disk or optical disk, can be provided and coupled to bus 802 for storing information and instructions.

Computer system 800 can be coupled via bus 802 to a display 812, such as a cathode ray tube (CRT) or liquid crystal display (LCD), for displaying information to a computer user. An input device 814, including alphanumeric and other keys, can be coupled to bus 802 for communicating information and command selections to processor 804. Another type of user input device is a cursor control 816, such as a mouse, a trackball or cursor direction keys for communicating direction information and command selections to processor 804 and for controlling cursor movement on display 812. This input device typically has two degrees of freedom in two axes, a first axis (i.e., x) and a second axis (i.e., y), that allows the device to specify positions in a plane.

A computer system 800 can perform the present teachings. Consistent with certain implementations of the present teachings, results can be provided by computer system 800 in response to processor 804 executing one or more sequences of one or more instructions contained in memory 806. Such instructions can be read into memory 806 from another computer-readable medium, such as storage device 810. Execution of the sequences of instructions contained in memory 806 can cause processor 804 to perform the processes described herein. Instructions in the memory can sequence the use of various combinations of logic gates available within the processor to perform the processes describe herein. Alternatively hard-wired circuitry can be used in place of or in combination with software instructions to implement the present teachings. The hard-wired circuitry can include the necessary logic gates, operated in the necessary sequence to perform the processes described herein. Thus implementations of the present teachings are not limited to any specific combination of hardware circuitry and software.

The term "computer-readable medium" as used herein refers to any media that participates in providing instructions to processor 804 for execution. Such a medium can take many forms, including but not limited to, non-volatile media, volatile media, and transmission media. Examples of non-volatile media can include, but are not limited to, optical or magnetic disks, such as storage device 810. Examples of volatile media can include, but are not limited to, dynamic memory, such as memory 806. Examples of transmission media can include, but are not limited to, coaxial cables, copper wire, and fiber optics, including the wires that comprise bus 802.

Common forms of non-transitory computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, PROM, and EPROM, a FLASH-EPROM, any other memory chip or cartridge, or any other tangible medium from which a computer can read.

Instructions configured to be executed by a processor to perform a method are stored on a computer-readable medium. The computer-readable medium can be a device that stores digital information. For example, a computer-readable medium includes a compact disc read-only memory (CD-ROM) as is known in the art for storing software. The computer-readable medium is accessed by a processor suitable for executing instructions configured to be executed.

The methods of the present teachings may be implemented in a software program and applications written in conventional programming languages such as C, C++, G, etc.

While the present teachings are described in conjunction with various embodiments, it is not intended that the present teachings be limited to such embodiments. On the contrary, the present teachings encompass various alternatives, modifications, and equivalents, as will be appreciated by those of skill in the art. The scope of the invention is defined by the appended claims.

The embodiments described herein, can be practiced with other computer system configurations including hand-held devices, microprocessor systems, microprocessor-based or programmable consumer electronics, minicomputers, mainframe computers and the like. The embodiments can also be practiced in distributing computing environments where tasks are performed by remote processing devices that are linked through a network.

It should also be understood that the embodiments described herein can employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

Any of the operations that form part of the embodiments described herein are useful machine operations. The embodiments, described herein, also relate to a device or an apparatus for performing these operations. The systems and methods described herein can be specially constructed for the required purposes or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

Certain embodiments can also be embodied as computer readable code on a computer readable medium. The computer readable medium is any data storage device that can store data, which can thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer systems so that the computer readable code is stored and executed in a distributed fashion.

## Claims

1. A method of analyzing a sample, the method comprising:
∘ separating precursor ions from the sample into narrow mass range groups based on mass-to-charge ratio, where a narrow mass range has a width of less than 20 Da;
∘ fragmenting the ions from each group to create groups of fragment ions;
∘ injecting the groups of fragment ions subsequently into a first cell of a first ion transport mechanism including N cells while moving fragment ions from said first cell to a second cell and moving fragment ion along the cells of the first ion transport mechanism until they reach the N-th cell of the first ion transport mechanism;
∘ transferring ions from the (N-1)-th cell of the first ion transport mechanism in a first storage cell of a first storage cell array (216, 712A, 714A) and transferring ions from the N-th cell of the first ion transport mechanism in a second storage cell of the first storage cell array (216, 712A, 714A);
∘ transferring ions from the first storage cell of the first storage cell array (216, 712A, 714A) to a third storage cell of a second storage cell array (218, 712B, 714B) and transferring ions from the second storage cell of the first storage cell array (216, 712A, 714A) to a fourth storage cell of the second storage cell array (218, 712B, 714B);
∘ transferring ion from the third storage cell of the second storage cell array (218, 712B, 714B) to a first cell of a second ion transport mechanism and transferring ion from the fourth storage cell of a second storage cell array (218, 712B, 714B) to the second cell of the second ion transport mechanism;
∘ moving fragment ion along the cells of the second ion transport mechanism until they reach the final cell of the second ion transport mechanism;
∘ transferring ions from the final cell of the final cell of the second ion transport mechanism and mass analyzing fragment ions from each group of fragment ions using a multireflection TOF mass analyzer or a Fourier transform mass analyzer (208); wherein
∘ the separation and fragmentation occur in a first timing region (210) and the mass analyzing occurs in a second timing region (212), a timing requirement of the first timing region (210) is decoupled from a timing requirement of the second timing region (212) by accumulating fragment ions in the first storage cell array (216, 712A, 714A) in the first timing region (210) and transferring the fragment ions to the second storage cell array (218, 712B, 714B) in the second timing region (212) when the timing cycles align,
∘ the cycle time of the mass analyzer (208) is greater than about five times longer than the cycle time of a narrow mass range scan time, wherein the narrow mass range scan time is between 50 microseconds and 500 microseconds.

2. The method of claim 1, wherein the cycle time of the mass analyzer (208) is greater than about ten times longer than the cycle time of the narrow mass range scan time.

3. The method of claim 1, wherein the cycle time of the mass analyzer (208) is less than about 15 times longer than the cycle time of the narrow mass range scan time.

4. The method of claim 1, wherein the cycle time of the mass analyzer (208) is between about 1 millisecond and about 10 milliseconds, such as between about 3 milliseconds and about 7 milliseconds, even between about 4 and 6 milliseconds.

5. A mass spectrometer (100, 200, 700), comprising:
∘ an ion source (102, 202, 702) configured to produce precursor ions from a sample;
∘ a linear ion trap (204, 704) configured to separate the precursor ions into a plurality of narrow mass ranges based on mass-to-charge ratio, wherein a narrow mass range has a width of less than 20 Da;
∘ a fragmentation device (206, 706) configured to fragment ions in a narrow mass range of precursor ions to generate a group of fragment ions;
∘ a first moving latch ion transport mechanism (214) including N cells with N ≥ 4 including a first cell (402) arranged to receive the fragment ions from the fragmentation device (206, 706) and wherein the n-th cell of the ion transport mechanism is arranged to receive the fragment ions from the (n-1)-th cell, where *n* ≤ *N*;
∘ a first storage cell array (216, 712A, 714A) including a first storage cell (416-424) and a second storage cell (416-424), the first storage cell (416-424) configured to accumulate fragment ions from the (N-1)-th cell of the first moving latch ion transport mechanism (214) from a first narrow mass range of precursor ions, the second storage cell (416-424) configured to accumulate fragment ions from the N-th cell of the first moving latch ion transport mechanism (214) from a second narrow mass range of precursor ions, the first storage cell array (216, 712A, 714A) configured to isolate fragment ions from the first narrow mass range of precursor ions from fragment ions from the second narrow mass range of precursor ions;
∘ a second storage cell array (218, 712B, 714B) including a third storage cell (502-510) and a fourth storage cell (502-510), the third storage cell (502-510) configured to receive ions from the first storage cell (416-424) and the fourth storage cell (502-510) configured to receive ions from the second storage cell (416-424);
∘ a second moving latch ion transport mechanism (220) including a first cell (512-520) to receive the ions from the third storage cell (502-510) and a second cell (512-520) to receive the ions from a fourth storage cell (512-510) and a final cell (530) to receive ions advanced from the first cell (512-520) and second cell (512-520); and
∘ a mass analyzer (104, 208, 720) configured to receive ions from the final cell (530) of the second moving latch ion transport mechanism (220) and analyze the mass-to-charge ratio of fragment ions from the first narrow mass range and separately receive ions and analyze the mass-to-charge ratio of fragment ions from the second narrow mass range, wherein
∘ the ion source (102, 202, 702), the linear ion trap (204, 704), the fragmentation device (206, 706), the first moving latch ion transport mechanism (214) and the first storage cell array (216, 712A, 714A) are arranged in a first timing region (210) and the second storage cell array (218, 712B, 714B), the second moving latch ion transport mechanism (220) and the mass analyzer (104, 208, 720) are arranged in a second timing region (212) decoupled from the first timing region (210) at the point between the first storage cell array (216, 712A, 714A) and the second storage cell array (218, 712B, 714B).

6. The mass spectrometer (100, 200, 700) of claim 5, wherein the mass analyzer (104, 208, 720) is a multireflection TOF mass analyzer or a Fourier transform mass analyzer.

7. The mass spectrometer (100, 200, 700) of claim 6, wherein the multireflection TOF mass analyzer or a Fourier transform time mass analyzer is a multi-reflection time-of-flight mass analyzer.

8. The mass spectrometer (100, 200, 700) of claim 5, further including a first ion transport system (214, 710A) configured to transport fragment ions from the fragmentation device (206, 706) to the first storage cell array (216, 712, 714A) while isolating fragment ions from the first narrow mass range from fragment ions from the second narrow mass range;
the first ion transport system (214, 710A) including:
a plurality of pole rods arranged in first and second rows, the second row parallel to the first row, each pole rod of the first row forming a pole rod pair (302) with a corresponding pole rod of the second row, the pole rod pairs (302) defining a plurality of ion transport cells, each ion transport cell uniquely corresponding to a contiguous group of a fixed number of pole rod pairs (302), such that no two ion transport cells share a common pole rod pair (302).

9. The mass spectrometer (100, 200, 700) of claim 8, further comprising a second ion transport system (220, 710B) configured to transport fragment ions from the second storage cell array (218, 712B, 714B) to the mass analyzer (104, 208, 708) while isolating fragment ions from a first narrow mass range from fragment ions from a second narrow mass range;
the second ion transport system (220, 710B) including:
a second plurality of pole rods arranged in third and fourth rows, the fourth row parallel to the third row, each pole rod of the third row forming a pole rod pair (302) with a corresponding pole rod of the fourth row, the pole rod pairs (302) defining a plurality of ion transport cells, each ion transport cell uniquely corresponding to a contiguous group of a fixed number of pole rod pairs (302), such that no two ion transport cells share a common pole rod pair (302).

10. The mass spectrometer (100, 200, 700) of claim 9, wherein the first ion transport system (214, 710A) is configured to eject ions in a direction parallel to the pole rods into the first storage cell array (216, 712A, 714A) and the second ion transport system (220, 710B) is configured to eject ions in a direction of travel along the second plurality of pole rods and into the mass analyzer (104, 208, 708).

11. The mass spectrometer (700) of claim 5, further comprising a first ion path (722A) including the first storage cell array (712A) and the second storage cell array (714A) and a second ion path (722B) including a third storage cell array (712B) and a fourth storage cell array (714B), wherein the fragmentation device (706) directs fragment ions from a third narrow mass range and fragment ions from a fourth narrow mass range to the second ion path (722B).

12. The mass spectrometer (700) of claim 11, wherein the first ion path (722A) further includes a first ion transport system (710A) configured to transport fragment ions from the fragmentation device (706) to the first storage cell array (712A) while isolating fragment ions from the first narrow mass range from fragment ions from the second narrow mass range, and the second ion path (722B) further includes a second ion transport system (710B) configured to transport fragment ions from the fragmentation device (706) to the third storage cell array (712B) while isolating fragment ions from the third narrow mass range from fragment ions from the fourth narrow mass range.

13. The mass spectrometer (700) of claim 12, further comprising a third ion transport system configured to transport fragment ions from the second storage cell array (714A) and the fourth storage cell array (714B) to the mass analyzer (708).

## Patentansprüche

1. Verfahren zum Analysieren einer Probe, das Verfahren umfassend:
∘ Trennen von Vorläuferionen aus der Probe in schmale Massenbereiche basierend auf dem Masse-zu-Ladung-Verhältnis, wobei ein schmaler Massenbereich eine Breite von weniger als 20 Da aufweist;
∘ Fragmentieren der Ionen aus jeder Gruppe, um Gruppen von Fragmentionen zu erzeugen;
∘ Injizieren der Gruppen von Fragmentionen anschließend in eine erste Zelle eines ersten Ionentransportmechanismus, der N Zellen einschließt, während Fragmentionen von der ersten Zelle zu einer zweiten Zelle bewegt werden und Fragmentionen entlang der Zellen des ersten lonentransportmechanismus bewegt werden, bis sie die N-te Zelle des ersten Ionentransportmechanismus erreichen;
∘ Übertragen von Ionen aus der (N-1)-ten Zelle des ersten lonentransportmechanismus in eine erste Speicherungszelle einer ersten Speicherungszellenanordnung (216, 712A, 714A) und Übertragen von Ionen aus der N-ten Zelle des ersten lonentransportmechanismus in eine zweite Speicherungszelle der ersten Speicherungszellenanordnung (216, 712A, 714A);
∘ Übertragen von Ionen von der ersten Speicherungszelle der ersten Speicherungszellenanordnung (216, 712A, 714A) zu einer dritten Speicherungszelle einer zweiten Speicherungszellenanordnung (218, 712B, 714B) und Übertragen von Ionen von der zweiten Speicherungszelle der ersten Speicherungszellenanordnung (216, 712A, 714A) zu einer vierten Speicherungszelle der zweiten Speicherungszellenanordnung (218, 712B, 714B);
∘ Übertragen von Ionen von der dritten Speicherungszelle der zweiten Speicherungszellenanordnung (218, 712B, 714B) zu einer ersten Zelle eines zweiten lonentransportmechanismus und Übertragen von Ionen von der vierten Speicherungszelle einer zweiten Speicherungszellenanordnung (218, 712B, 714B) zu der zweiten Zelle des zweiten lonentransportmechanismus;
∘ Bewegen von Fragmentionen entlang der Zellen des zweiten Ionentransportmechanismus, bis sie die letzte Zelle des zweiten lonentransportmechanismus erreichen;
∘ Übertragen von Ionen aus der letzten Zelle der letzten Zelle des zweiten lonentransportmechanismus und Massenanalyse von Fragmentionen aus jeder Gruppe von Fragmentionen unter Verwendung eines Multireflexions-TOF-Massenanalysators oder eines Fourier-Transformations-Massenanalysators (208); wobei
∘ die Trennung und Fragmentierung in einer ersten Zeitgebungsregion (210) und die Massenanalyse in einer zweiten Zeitgebungsregion (212) stattfindet, wobei eine Zeitgebungsanforderung der ersten Zeitgebungsregion (210) von einer Zeitgebungsanforderung der zweiten Zeitgebungsregion (212) entkoppelt wird, indem Fragmentionen in der ersten Speicherungszellenanordnung (216, 712A, 714A) in der ersten Zeitgebungsregion (210) akkumuliert werden und die Fragmentionen zu der zweiten Speicherungszellenanordnung (218, 712B, 714B) in der zweiten Zeitgebungsregion (212) übertragen werden, wenn die Zeitgebungszyklen übereinstimmen,
∘ die Zykluszeit des Massenanalysators (208) mehr als etwa fünfmal länger ist als die Zykluszeit einer schmalen Massenbereichsabtastzeit, wobei die schmale Massenbereichsabtastzeit zwischen 50 Mikrosekunden und 500 Mikrosekunden liegt.

2. Verfahren nach Anspruch 1, wobei die Zykluszeit des Massenanalysators (208) mehr als etwa zehn Mal länger wie die Zykluszeit der Abtastzeit für den schmalen Massenbereich ist.

3. Verfahren nach Anspruch 1, wobei die Zykluszeit des Massenanalysators (208) weniger als etwa 15 Mal länger als die Zykluszeit der Abtastzeit des schmalen Massenbereichs ist.

4. Verfahren nach Anspruch 1, wobei die Zykluszeit des Massenanalysators (208) zwischen etwa 1 Millisekunde und etwa 10 Millisekunden liegt, wie zwischen etwa 3 Millisekunden und etwa 7 Millisekunden, sogar zwischen etwa 4 und 6 Millisekunden.

5. Massenspektrometer (100, 200, 700), umfassend:
∘ eine Ionenquelle (102, 202, 702), die konfiguriert ist, um Vorläuferionen aus einer Probe zu erzeugen;
∘ eine lineare Ionenfalle (204, 704), die konfiguriert ist, um die Vorläuferionen in eine Vielzahl von schmalen Massenbereichen basierend auf dem Masse-zu-Ladung-Verhältnis zu trennen, wobei ein schmaler Massenbereich eine Breite von weniger als 20 Da aufweist;
∘ eine Fragmentierungsvorrichtung (206, 706), die konfiguriert ist, um Ionen in einem schmalen Massenbereich von Vorläuferionen zu fragmentieren, um eine Gruppe von Fragmentionen zu erzeugen;
∘ einen ersten beweglichen Verriegelungsionentransportmechanismus (214), der N Zellen mit *N* ≥ *4* einschließt, einschließlich einer ersten Zelle (402), die angeordnet ist, um die Fragmentionen von der Fragmentierungsvorrichtung (206, 706) zu empfangen, und wobei die n-te Zelle des lonentransportmechanismus angeordnet ist, um die Fragmentionen von der (n-1)-ten Zelle zu empfangen, wobei *n* ≤ *N* ist;
∘ eine erste Speicherungszellenanordnung (216, 712A, 714A), die eine erste Speicherungszelle (416-424) und eine zweite Speicherungszelle (416-424) einschließt, wobei die erste Speicherungszelle (416-424) konfiguriert ist, um Fragmentionen von der (N-1)-ten Zelle des ersten beweglichen Verriegelungsionentransportmechanismus (214) aus einem ersten schmalen Massenbereich von Vorläuferionen zu akkumulieren, die zweite Speicherungszelle (416-424) konfiguriert ist, um Fragmentionen aus der N-ten Zelle des ersten beweglichen Verriegelungsionentransportmechanismus (214) aus einem zweiten schmalen Massenbereich von Vorläuferionen zu akkumulieren, wobei die erste Speicherungszellenanordnung (216, 712A, 714A) konfiguriert ist, um Fragmentionen aus dem ersten schmalen Massenbereich von Vorläuferionen von Fragmentionen aus dem zweiten schmalen Massenbereich von Vorläuferionen zu isolieren;
∘ eine zweite Speicherungszellenanordnung (218, 712B, 714B), die eine dritte Speicherungszelle (502-510) und eine vierte Speicherungszelle (502-510) einschließt, wobei die dritte Speicherungszelle (502-510) konfiguriert ist, um Ionen von der ersten Speicherungszelle (416-424) zu empfangen und die vierte Speicherungszelle (502-510) konfiguriert ist, um Ionen von der zweiten Speicherungszelle (416-424) zu empfangen;
∘ einen zweiten beweglichen Verriegelungsionentransportmechanismus (220), der eine erste Zelle (512-520) zum Empfangen der Ionen aus der dritten Speicherungszelle (502-510) und eine zweite Zelle (512-520) zum Empfangen der Ionen aus einer vierten Speicherungszelle (512-510) und eine letzte Zelle (530) zum Empfangen von Ionen, die aus der ersten Zelle (512-520) und der zweiten Zelle (512-520) weitergeleitet werden, einschließt; und
∘ einen Massenanalysator (104, 208, 720), der konfiguriert ist, um Ionen von der letzten Zelle (530) des zweiten beweglichen Verriegelungsionentransportmechanismus (220) zu empfangen und das Masse-zu-Ladung-Verhältnis von Fragmentionen aus dem ersten schmalen Massenbereich zu analysieren und separat Ionen zu empfangen und das Masse-zu-Ladung-Verhältnis von Fragmentionen aus dem zweiten schmalen Massenbereich zu analysieren, wobei
∘ die Ionenquelle (102, 202, 702), die lineare Ionenfalle (204, 704), die Fragmentierungsvorrichtung (206, 706), der erste bewegliche Verriegelungsionentransportmechanismus (214) und die erste Speicherungszellenanordnung (216, 712A, 714A) in einem ersten Zeitgebungsbereich (210) und die zweite Speicherungszellenanordnung (218, 712B, 714B) angeordnet sind, der zweite bewegliche Verriegelungsionentransportmechanismus (220) und der Massenanalysator (104, 208, 720) in einem zweiten Zeitgebungsbereich (212) angeordnet sind, der von dem ersten Zeitgebungsbereich (210) an dem Punkt zwischen der ersten Speicherungszellenanordnung (216, 712A, 714A) und der zweiten Speicherungszellenanordnung (218, 712B, 714B) entkoppelt ist.

6. Massenspektrometer (100, 200, 700) nach Anspruch 5, wobei der Massenanalysator (104, 208, 720) ein Multireflexions-TOF-Massenanalysator oder ein Fourier-Transformations-Massenanalysator ist.

7. Massenspektrometer (100, 200, 700) nach Anspruch 6, wobei der Multireflexions-TOF-Massenanalysator oder ein Fourier-Transformations-Zeit-Massenanalysator ein Multireflexions-Flugzeit-Massenanalysator ist.

8. Massenspektrometer (100, 200, 700) nach Anspruch 5, ferner einschließend ein erstes Ionentransportsystem (214, 710A), das konfiguriert ist, um Fragmentionen von der Fragmentierungsvorrichtung (206, 706) zu der ersten Speicherungszellenanordnung (216, 712, 714A) zu transportieren, während Fragmentionen aus dem ersten schmalen Massenbereich von Fragmentionen aus dem zweiten schmalen Massenbereich isoliert werden;
das erste Ionentransportsystem (214, 710A) einschließend:
eine Vielzahl von Polstäben, die in einer ersten und einer zweiten Reihe angeordnet sind, wobei die zweite Reihe parallel zu der ersten Reihe verläuft, wobei jeder Polstab der ersten Reihe ein Polstabpaar (302) mit einem entsprechenden Polstab der zweiten Reihe bildet, wobei die Polstabpaare (302) eine Vielzahl von Ionentransportzellen definieren, wobei jede Ionentransportzelle eindeutig einer zusammenhängenden Gruppe einer festen Anzahl von Polstabpaaren (302) entspricht, sodass keine zwei Ionentransportzellen ein gemeinsames Polstabpaar (302) teilen.

9. Massenspektrometer (100, 200, 700) nach Anspruch 8, ferner umfassend ein zweites Ionentransportsystem (220, 710B), das konfiguriert ist, um Fragmentionen von der zweiten Speicherungszellenanordnung (218, 712B, 714B) zu dem Massenanalysator (104, 208, 708) zu transportieren, während Fragmentionen aus einem ersten schmalen Massenbereich von Fragmentionen aus einem zweiten schmalen Massenbereich isoliert werden;
das zweite Ionentransportsystem (220, 710B) einschließend:
eine zweite Vielzahl von Polstäben, die in einer dritten und einer vierten Reihe angeordnet sind, wobei die vierte Reihe parallel zu der dritten Reihe verläuft, wobei jeder Polstab der dritten Reihe ein Polstabpaar (302) mit einem entsprechenden Polstab der vierten Reihe bildet, wobei die Polstabpaare (302) eine Vielzahl von Ionentransportzellen definieren, wobei jede Ionentransportzelle eindeutig einer zusammenhängenden Gruppe einer festen Anzahl von Polstabpaaren (302) entspricht, sodass keine zwei Ionentransportzellen ein gemeinsames Polstabpaar (302) teilen.

10. Massenspektrometer (100, 200, 700) nach Anspruch 9, wobei das erste lonentransportsystem (214, 710A) konfiguriert ist, um Ionen in einer Richtung parallel zu den Polstäben in die erste Speicherungszellenanordnung (216, 712A, 714A) auszustoßen, und das zweite Ionentransportsystem (220, 710B) konfiguriert ist, um Ionen in einer Bewegungsrichtung entlang der zweiten Vielzahl von Polstäben und in den Massenanalysator (104, 208, 708) auszustoßen.

11. Massenspektrometer (700) nach Anspruch 5, ferner umfassend einen ersten lonenpfad (722A), der die erste Speicherungszellenanordnung (712A) und die zweite Speicherungszellenanordnung (714A) einschließt, und einen zweiten lonenpfad (722B), der eine dritte Speicherungszellenanordnung (712B) und eine vierte Speicherungszellenanordnung (714B) einschließt, wobei die Fragmentierungsvorrichtung (706) Fragmentionen aus einem dritten schmalen Massenbereich und Fragmentionen aus einem vierten schmalen Massenbereich zu dem zweiten lonenpfad (722B) leitet.

12. Massenspektrometer (700) nach Anspruch 11, wobei der erste lonenpfad (722A) ferner ein erstes lonentransportsystem (710A) einschließt, das konfiguriert ist, um Fragmentionen von der Fragmentierungsvorrichtung (706) zu der ersten Speicherungszellenanordnung (712A) zu transportieren, während Fragmentionen aus dem ersten schmalen Massenbereich von Fragmentionen aus dem zweiten schmalen Massenbereich isoliert werden, und der zweite lonenpfad (722B) ferner ein zweites lonentransportsystem (710B) einschließt, das konfiguriert ist, um Fragmentionen von der Fragmentierungsvorrichtung (706) zu der dritten Speicherungszellenanordnung (712B) zu transportieren, während Fragmentionen aus dem dritten schmalen Massenbereich von Fragmentionen aus dem vierten schmalen Massenbereich isoliert werden.

13. Massenspektrometer (700) nach Anspruch 12, ferner umfassend ein drittes Ionentransportsystem, das konfiguriert ist, um Fragmentionen von der zweiten Speicherungszellenanordnung (714A) und der vierten Speicherungszellenanordnung (714B) zu dem Massenanalysator (708) zu transportieren.

## Revendications

1. Procédé d'analyse d'un échantillon, le procédé comprenant :
∘ la séparation d'ions précurseurs de l'échantillon en groupes de plage de masse étroite sur la base d'un rapport masse/charge, où une plage de masse étroite a une largeur inférieure à 20 Da ;
∘ la fragmentation des ions de chaque groupe pour créer des groupes d'ions fragments ;
∘ l'injection ultérieure des groupes d'ions fragments dans une première cellule d'un premier mécanisme de transport d'ions comportant N cellules tout en déplaçant des ions fragments de ladite première cellule vers une deuxième cellule et en déplaçant des ions fragments le long des cellules du premier mécanisme de transport d'ions jusqu'à ce qu'ils atteignent la N^{e} cellule du premier mécanisme de transport d'ions ;
∘ le transfert d'ions depuis la (N-1)^{e} cellule du premier mécanisme de transport d'ions dans une première cellule de stockage d'un premier réseau de cellules de stockage (216, 712A, 714A) et le transfert d'ions depuis la N^{e} cellule du premier mécanisme de transport d'ions dans une deuxième cellule de stockage du premier réseau de cellules de stockage (216, 712A, 714A) ;
∘ le transfert d'ions depuis la première cellule de stockage du premier réseau de cellules de stockage (216, 712A, 714A) vers une troisième cellule de stockage d'un deuxième réseau de cellules de stockage (218, 712B, 714B) et le transfert d'ions depuis la deuxième cellule de stockage du premier réseau de cellules de stockage (216, 712A, 714A) vers une quatrième cellule de stockage du deuxième réseau de cellules de stockage (218, 712B, 714B) ;
∘ le transfert d'ions depuis la troisième cellule de stockage du deuxième réseau de cellules de stockage (218, 712B, 714B) vers une première cellule d'un second mécanisme de transport d'ions et le transfert d'ions depuis la quatrième cellule de stockage d'un deuxième réseau de cellules de stockage (218, 712B, 714B) vers la deuxième cellule du second mécanisme de transport d'ions ;
∘ le déplacement d'ions fragments le long des cellules du second mécanisme de transport d'ions jusqu'à ce qu'ils atteignent la cellule finale du second mécanisme de transport d'ions ;
∘ le transfert d'ions depuis la cellule finale de la cellule finale du second mécanisme de transport d'ions et l'analyse de masse d'ions fragments de chaque groupe d'ions fragments à l'aide d'un analyseur de masse TOF multiréflexion ou d'un analyseur de masse à transformée de Fourier (208) ; dans lequel
∘ la séparation et la fragmentation se produisent dans une première région de synchronisation (210) et l'analyse de masse se produit dans une seconde région de synchronisation (212), une exigence de synchronisation de la première région de synchronisation (210) est découplée d'une exigence de synchronisation de la seconde région de synchronisation (212) en accumulant des ions fragments dans le premier réseau de cellules de stockage (216, 712A, 714A) dans la première région de synchronisation (210) et le transfert des ions fragments vers le deuxième réseau de cellules de stockage (218, 712B, 714B) dans la seconde région de synchronisation (212) lorsque les cycles de synchronisation s'alignent,
∘ le temps de cycle de l'analyseur de masse (208) est supérieur à environ cinq fois plus longtemps que le temps de cycle d'un temps de balayage à plage de masse étroite, dans lequel le temps de balayage à plage de masse étroite est compris entre 50 microsecondes et 500 microsecondes.

2. Procédé selon la revendication 1, dans lequel le temps de cycle de l'analyseur de masse (208) est supérieur à environ dix plus longtemps que le temps de cycle du temps de balayage à plage de masse étroite.

3. Procédé selon la revendication 1, dans lequel le temps de cycle de l'analyseur de masse (208) est inférieur à environ 15 fois plus longtemps que le temps de cycle du temps de balayage à plage de masse étroite.

4. Procédé selon la revendication 1, dans lequel le temps de cycle de l'analyseur de masse (208) est compris entre environ 1 milliseconde et environ 10 millisecondes, tel qu'entre environ 3 millisecondes et environ 7 millisecondes, voire entre environ 4 et 6 millisecondes.

5. Spectromètre de masse (100, 200, 700), comprenant :
∘ une source d'ions (102, 202, 702) configurée pour produire des ions précurseurs à partir d'un échantillon ;
∘ un piège à ions linéaire (204, 704) configuré pour séparer les ions précurseurs en une pluralité de plages de masse étroites sur la base d'un rapport masse/charge, dans lequel une plage de masse étroite a une largeur inférieure à 20 Da ;
∘ un dispositif de fragmentation (206, 706) configuré pour fragmenter des ions dans une plage de masse étroite d'ions précurseurs afin de générer un groupe d'ions fragments ;
∘ un premier mécanisme de transport d'ions à verrouillage mobile (214) comportant N cellules avec *N* ≥ 4 comportant une première cellule (402) agencée pour recevoir les ions fragments du dispositif de fragmentation (206, 706) et dans lequel la n^{e} cellule du mécanisme de transport d'ions est agencée pour recevoir les ions fragments de la (n-1)^{e} cellule, où *n* ≤ N ;
∘ un premier réseau de cellules de stockage (216, 712A, 714A) comportant une première cellule de stockage (416-424) et une deuxième cellule de stockage (416-424), la première cellule de stockage (416-424) étant configurée pour accumuler des ions fragments à partir de la (N-1)^{e} cellule du premier mécanisme de transport d'ions à verrouillage mobile (214) depuis une première plage de masse étroite d'ions précurseurs, la deuxième cellule de stockage (416-424) étant configurée pour accumuler des ions fragments à partir de la N^{e} cellule du premier mécanisme de transport d'ions à verrouillage mobile (214) depuis une seconde plage de masse étroite d'ions précurseurs, le premier réseau de cellules de stockage (216, 712A, 714A) étant configuré pour isoler des ions fragments de la première plage de masse étroite d'ions précurseurs d'ions fragments de la seconde plage de masse étroite d'ions précurseurs ;
∘ un deuxième réseau de cellules de stockage (218, 712B, 714B) comportant une troisième cellule de stockage (502-510) et une quatrième cellule de stockage (502-510), la troisième cellule de stockage (502-510) étant configurée pour recevoir des ions de la première cellule de stockage (416-424) et la quatrième cellule de stockage (502-510) étant configurée pour recevoir des ions de la deuxième cellule de stockage (416-424) ;
∘ un second mécanisme de transport d'ions à verrouillage mobile (220) comportant une première cellule (512-520) pour recevoir les ions de la troisième cellule de stockage (502-510) et une deuxième cellule (512-520) pour recevoir les ions d'une quatrième cellule de stockage (512-510) et une dernière cellule (530) pour recevoir des ions acheminés de la première cellule (512-520) et de la deuxième cellule (512-520) ; et
∘ un analyseur de masse (104, 208, 720) configuré pour recevoir des ions de la cellule finale (530) du second mécanisme de transport d'ions à verrouillage mobile (220) et analyser le rapport masse/charge d'ions fragments de la première plage de masse étroite et recevoir séparément des ions et analyser le rapport masse/charge d'ions fragments de la seconde plage de masse étroite, dans lequel
∘ la source d'ions (102, 202, 702), le piège à ions linéaire (204, 704), le dispositif de fragmentation (206, 706), le premier mécanisme de transport d'ions à verrouillage mobile (214) et le premier réseau de cellules de stockage (216, 712A, 714A) sont agencés dans une première région de synchronisation (210) et le deuxième réseau de cellules de stockage (218, 712B, 714B), le second mécanisme de transport d'ions à verrouillage mobile (220) et l'analyseur de masse (104, 208, 720) sont agencés dans une seconde région de synchronisation (212) découplée de la première région de synchronisation (210) au niveau de l'emplacement entre le premier réseau de cellules de stockage (216, 712A, 714A) et le deuxième réseau de cellules de stockage (218, 712B, 714B).

6. Spectromètre de masse (100, 200, 700) selon la revendication 5, dans lequel l'analyseur de masse (104, 208, 720) est un analyseur de masse TOF multiréflexion ou un analyseur de masse à transformée de Fourier.

7. Spectromètre de masse (100, 200, 700) selon la revendication 6, dans lequel l'analyseur de masse TOF multiréflexion ou un analyseur de masse temporel à transformée de Fourier est un analyseur de masse à temps de vol multiréflexion.

8. Spectromètre de masse (100, 200, 700) selon la revendication 5, comportant en outre un premier système de transport d'ions (214, 710A) configuré pour transporter des ions fragments depuis le dispositif de fragmentation (206, 706) vers le premier réseau de cellules de stockage (216, 712, 714A) tout en isolant des ions fragments de la première plage de masse étroite d'ions fragments de la seconde plage de masse étroite ;
le premier système de transport d'ions (214, 710A) comportant :
une pluralité de tiges polaires agencées en première et deuxième rangées, la deuxième rangée étant parallèle à la première rangée, chaque tige polaire de la première rangée formant une paire de tiges polaires (302) avec une tige polaire correspondante de la deuxième rangée, les paires de tiges polaires (302) définissant une pluralité de cellules de transport d'ions, chaque cellule de transport d'ions correspondant de manière unique à un groupe contigu d'un certain nombre fixe de paires de tiges polaires (302), de telle sorte qu'il n'y a pas deux cellules de transport d'ions qui partagent une paire de tiges polaires commune (302).

9. Spectromètre de masse (100, 200, 700) selon la revendication 8, comprenant en outre un second système de transport d'ions (220, 710B) configuré pour transporter des ions fragments depuis le deuxième réseau de cellules de stockage (218, 712B, 714B) vers l'analyseur de masse (104, 208, 708) tout en isolant des ions fragments d'une première plage de masse étroite d'ions fragments d'une seconde plage de masse étroite ;
le second système de transport d'ions (220, 710B) comportant :
une seconde pluralité de tiges polaires agencées en troisième et quatrième rangées, la quatrième rangée étant parallèle à la troisième rangée, chaque tige polaire de la troisième rangée formant une paire de tiges polaires (302) avec une tige polaire correspondante de la quatrième rangée, les paires de tiges polaires (302) définissant une pluralité de cellules de transport d'ions, chaque cellule de transport d'ions correspondant de manière unique à un groupe contigu d'un certain nombre fixe de paires de tiges polaires (302), de telle sorte qu'il n'y a pas deux cellules de transport d'ions qui partagent une paire de tiges polaires commune (302).

10. Spectromètre de masse (100, 200, 700) selon la revendication 9, dans lequel le premier système de transport d'ions (214, 710A) est configuré pour éjecter des ions dans une direction parallèle aux tiges polaires dans le premier réseau de cellules de stockage (216, 712A, 714A) et le second système de transport d'ions (220, 710B) est configuré pour éjecter des ions dans une direction de déplacement le long de la seconde pluralité de tiges polaires et dans l'analyseur de masse (104, 208, 708).

11. Spectromètre de masse (700) selon la revendication 5, comprenant en outre un premier trajet d'ions (722A) comportant le premier réseau de cellules de stockage (712A) et le deuxième réseau de cellules de stockage (714A) et un second trajet d'ions (722B) comportant un troisième réseau de cellules de stockage (712B) et un quatrième réseau de cellules de stockage (714B), dans lequel le dispositif de fragmentation (706) dirige des ions fragments d'une troisième plage de masse étroite et des ions fragments d'une quatrième plage de masse étroite vers le second trajet d'ions (722B).

12. Spectromètre de masse (700) selon la revendication 11, dans lequel le premier trajet d'ions (722A) comporte en outre un premier système de transport d'ions (710A) configuré pour transporter des ions fragments depuis le dispositif de fragmentation (706) vers le premier réseau de cellules de stockage (712A) tout en isolant des ions fragments de la première plage de masse étroite d'ions fragments de la seconde plage de masse étroite, et le second trajet d'ions (722B) comporte en outre un second système de transport d'ions (710B) configuré pour transporter des ions fragments depuis le dispositif de fragmentation (706) vers le troisième réseau de cellules de stockage (712B) tout en isolant des ions fragments de la troisième plage de masse étroite d'ions fragments de la quatrième plage de masse étroite.

13. Spectromètre de masse (700) selon la revendication 12, comprenant en outre un troisième système de transport d'ions configuré pour transporter des ions fragments depuis le deuxième réseau de cellules de stockage (714A) et le quatrième réseau de cellules de stockage (714B) vers l'analyseur de masse (708).
